# EUROPEAN PATENT APPLICATION

(11) **EP 4 120 245 A2**
(43) Date of publication of application: **18.01.2023**
(21) Application number: 22209878.2
(22) Date of filing: 28.11.2022
(51) Int. Cl.: G10L 15/26, G06F 3/16

(54) **METHOD AND APPARATUS FOR PROCESSING AUDIO DATA, AND ELECTRONIC DEVICE**

(30) Priority: 29.11.2021 CN 202111438967
(71) Applicant: Beijing Baidu Netcom Science Technology Co., Ltd., Beijing 100085 (CN)
(72) Inventor: JIANG, Peng, Beijing, 100085 (CN); HUANG, Weiqi, Beijing, 100085 (CN); XIA, Shuai, Beijing, 100085 (CN)
(74) Representative: Maiwald GmbH

(57) **Abstract**

A method for processing audio data includes: receiving (S201) at least two pieces of audio data sent by at least one audio matrix, in which the audio data is collected by a microphone array and sent to the audio matrix; converting (S202) all the audio data into corresponding text data; and sending (S203) the audio data and the text data corresponding to the audio data.

## Description

### TECHNICAL FIELD

The disclosure relates to a field of natural language processing (NLP) technologies, especially fields of audio technology, digital conference and speech transcription technologies, and in particular to a method for processing audio data, an apparatus for processing audio data, and an electronic device.

### BACKGROUND

With the rapid development of network communication and multi-media technology, some scenarios need to convert speech data into text data in real time, and record and display the text data. The typical scenarios include making the conference summary of the video conference or the offline conference. In some scenarios, it is possible that multiple users send audio data simultaneously. In this situation, how to convert the audio data sent by each user into the corresponding text data accurately in real time is a goal that has been pursued in the field of audio data processing.

### SUMMARY

Embodiments of the disclosure provide a method for processing audio data, an apparatus for processing audio data, and an electronic device.

According to a first aspect of the disclosure, a method for processing audio data is provided. The method includes:
receiving at least two audio data sent by at least one audio matrix, in which the audio data is collected by a microphone array and sent to the audio matrix;
converting all the audio data into respective text data; and
sending the audio data and the text data corresponding to the audio data.

According to a second aspect of the disclosure, an apparatus for processing audio data is provided. The apparatus includes:
a receiving module configured to receive at least two audio data sent by at least one audio matrix, in which the audio data is collected by a microphone array and sent to the audio matrix;
a data converting module configured to convert all the audio data into respective text data; and
a sending module is configured to send the audio data and the text data corresponding to the audio data.

According to a third aspect of the disclosure, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the method for processing audio data.

According to a fourth aspect of the disclosure, a non-transitory computer-readable storage medium storing computer instructions is provided. The computer instructions are configured to cause a computer to implement the method for processing audio data.

According to a fifth aspect of the disclosure, a computer program product including computer programs/instructions is provided. When the computer programs/instructions are executed by a processor, the method for processing audio data is implemented.

It is understandable that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure.
FIG. 1 is an optional flowchart illustrating a method for processing audio data according to some embodiment of the disclosure.
FIG. 2 is a detailed flowchart illustrating a method for processing audio data according to some embodiments of the disclosure.
FIG. 3 is an architecture diagram illustrating an apparatus for simultaneously processing audio data from two conferences according to some embodiments of the disclosure.
FIG. 4 is a schematic diagram illustrating optional compositions of an apparatus for processing audio data according to some embodiments of the disclosure.
FIG. 5 is a block diagram illustrating an electronic device used to implement the method for processing audio data according to some embodiments of the disclosure.

### DETAILED DESCRIPTION

The following describes the exemplary embodiments of the disclosure with reference to the accompanying drawings, which includes various details of the embodiments of the disclosure to facilitate understanding, which shall be considered merely examples. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

As described below, reference is made to "some embodiments", which describe a subset of all possible embodiments. However, it is understood that "some embodiments" may be the same subset or different subsets of all possible embodiments and can be combined with each other without conflict.

The term "first\second\third" as described below is only used to distinguish similar objects, and does not represent a specific ordering of objects. It is understood that "first\second\third" may be interchanged in a specific order or in sequence with permission, to enable the embodiments of the disclosure described herein to be practiced in sequences other than those illustrated or described herein.

Unless otherwise defined, all technical and scientific terms used herein have the same meaning as commonly understood by those skilled in the art in the technical field of the disclosure. The terms used herein is for the purpose of describing the embodiments of the disclosure only and are not intended to limit the disclosure.

Before the detailed description of the embodiments of the disclosure, the terms involved in the disclosure will be explained.
1) Audio matrix refers to an electronic device that arbitrarily outputs m-channel audio signals to n-channel devices through an array switching method. Generally, the number of input channels of the audio matrix is greater than the number of output channels, that is, m > n.
2) Natural Language Processing (NLP) is a discipline that takes language as the object and uses computer technology to analyze, understand and process the natural language. That is, the NLP takes the computer as a powerful tool for language research, and conducts quantitative research on language information with the support of the computer, to provide language descriptions that can be commonly used by human and computers. The NLP includes Natural Language Understanding (NLU) and Natural Language Generation (NLG). The NLP is mainly used in machine translation, public opinion monitoring, automatic summarization, opinion extraction, text classification, question answering, text semantic comparison, speech recognition, and Chinese Optical Character Recognition (OCR).
3) Hot words (also known as popular words or buzzwords), as a lexical phenomenon, reflect the issues and things that people generally pay attention to in a country or a region within a certain time period. Hot words have the characteristics of time and reflect the popular topics and people's livelihood issues of the time period, and its main forms of expression are language, text and network pictures.
4) Sensitive words generally refer to words with sensitive political tendencies or violent tendencies, erotic words or uncivilized words.
5) Microphone array includes two or more microphones. Microphones are energy converting devices configured to convert sound signals into electrical signals.

In the related art, some scenarios need to digitally record conferences/meetings to generate conference summaries, that is, convert the speech in the conference into text. In the related art, generally only one microphone is used to pick up sound. For example, in a conference room, when multiple people participate in the conference, only one microphone is used for sound pickup, so that it is difficult to determine which attendee the picked-up audio data is from. Alternatively, after the microphone picks up the sound, it needs to manually determine which attendee the picked-up audio data is from. However, this method cannot satisfy the requirements of real-time recording of the conference summary, and in the case where the voice ranges of two or more attendees are similar, it is difficult to accurately distinguish the audio data of diffident attendees.

The method for processing audio data according to embodiments of the disclosure includes: receiving at least two pieces of audio data sent by at least one audio matrix, in which the audio data is collected by a microphone array; converting all the audio data into respective text data; and sending the audio data and the text data corresponding to the audio data.

The method for processing audio data according to the embodiment of the disclosure can convert multiple channels of audio data into respective text data accurately in real time.

In order to further illustrate the technical solution according to embodiments of the disclosure, this method will be described in detail below in combination with the accompanying drawings and specific embodiments. Although the embodiments of the disclosure provide the operation steps of the method shown in the following embodiments or the accompanying drawings, more or less operation steps may be included in the method based on routine or without inventive works. In steps that logically do not have a necessary causal relation, the execution order of these steps is not limited to the execution order provided by the embodiments of the disclosure. In the actual processing process or when the method is executed by the control device, the method may be executed sequentially or in parallel according to the method shown in the embodiments or the accompanying drawings.

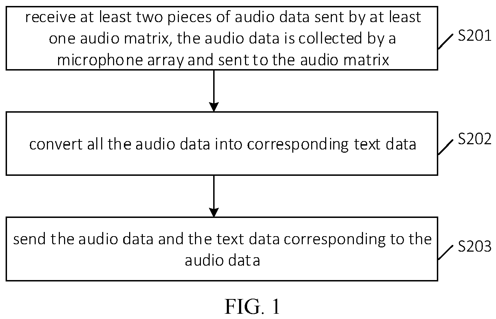

FIG. 1 is an optional flowchart illustrating a method for processing audio data according to some embodiments of the disclosure. The method for processing audio data may include at least the following blocks.

At block S201, at least two pieces of audio data sent by at least one audio matrix are received. The audio data is collected by a microphone array and sent to the audio matrix.

The apparatus for processing audio data receives the at least two pieces of audio data sent by the at least one audio matrix.

In some examples, one or more audio matrices can be set up in a conference room. Each audio matrix is connected to a microphone array. Through the connection between the audio matrix and the microphone matrix, the audio data picked up by the microphone can be sent to the audio matrix. A microphone array may include multiple microphones.

In a specific implementation, one conference may correspond to one audio matrix or multiple audio matrices. For a scenario where one conference corresponds to one audio matrix, the number of attendees is less than or equal to the number of microphones in the microphone array connected to the audio matrix. For example, if the number of attendees in the first conference is 12, and the first conference corresponds to only the first audio matrix, the microphone array connected to the first audio matrix includes 12 or more microphones. For a scenario where one conference corresponds to multiple audio matrices, the number of attendees is greater than the number of microphones in the microphone array connected to one audio matrix. Moreover, if the number of attendees in the second conference is 20, the second conference corresponds to the second audio matrix and the third audio matrix, and the microphone array connected to the second audio matrix includes 12 microphones, since the 12 microphones cannot pick up the audio data of the 20 attendees, or even if the 12 microphones can pick up the audio data of the 20 attendees, the problem of audio data crosstalk may occur. Therefore, the audio data of the second conference can be obtained by adopting multiple audio matrices, and the microphone array connected to the third audio matrix can include 8 or more microphones. The above description only takes a case where one conference corresponds to 2 audio matrices as an example, in practical application, one conference can correspond to multiple audio matrices. For example, the second conference corresponds to 3 audio matrices, and the microphone array connected to each audio matrix includes 7 microphones.

In some optional embodiments, a one-to-one correspondence between the microphone and the attendee is generated, thus it is possible to determine which attendee the audio data picked up by the microphone belongs to.

At block S202, all the audio data is converted into corresponding text data.

In some optional embodiments, converting all the audio data into corresponding text data includes: for each piece of audio data, converting the audio data into corresponding candidate text data; and in response to determining that the candidate text data contains a sensitive word, obtaining the text data by deleting the sensitive word in the candidate text data.

During specific implementation, the candidate text data is matched with preset sensitive words to detect whether the candidate text data contains the sensitive word. If the candidate text data contains the sensitive word, the sensitive word in the candidate text data is deleted or replaced with a special symbol. The special symbol can be preset as "^{∗}", "#" and "&". The sensitive word can be a word with sensitive political tendencies or violent tendencies, erotic words or uncivilized words that are set in advance.

In some optional embodiments, converting all the audio data into the corresponding text data includes: for each piece of audio data, converting the audio data into candidate text data; and in response to determining that the candidate text data contains a hot word, obtaining the text data by modifying the candidate text data based on the hot word.

In some embodiments, the candidate text data is matched with preset hot words to detect whether the candidate text data contains a sensitive word. If the candidate text data contains the sensitive word, the candidate text data is corrected based on the hot word. For example, if the candidate text data contains "mouse tail juice", in matching the candidate text data with the hot word, it is detected that "mouse tail juice" included in the candidate text data is a hot word, the hot word "mouse tail juice" is modified to "see for yourself'. The hot words may be Internet hot words, that is, emerging vocabularies generated and circulated on the Internet that is used more frequently and is given meaning in a particular era and language context.

In the embodiments of the disclosure, sensitive word detection can be performed only on the candidate text data, or hot word detection can be performed only on the candidate text data, or sensitive word detection and hot word detection can both be performed on the candidate text data.

In the embodiments of the disclosure, the candidate text data can be corrected by performing the sensitive word detection and the hot word detection on the candidate text data, so that the accuracy of converting the speech data into text data can be improved.

In the embodiments of the disclosure, the process of converting the audio data into the candidate text data can be implemented based on Automatic Speech Recognition (ASR) algorithm, which is not limited in the embodiments of the disclosure.

At block S203, the audio data and the text data corresponding to the audio data are sent.

In some optional embodiments, the apparatus for processing audio data sends the audio data and the text data corresponding to each piece of audio data to a display device corresponding to the apparatus for processing audio data, so that the display device displays the text data and an audio waveform corresponding the audio data. The display device may also be referred to as a front-end device, and the display device and the apparatus for processing audio data may be two independent devices, or the display device may be part of the apparatus for processing audio data.

In the embodiments of the disclosure, the conference summary is generated and further displayed by displaying the text data and the audio waveform corresponding to the audio data on the display device, so that the user can view the contents of the conference intuitively. In some embodiments, the conference summary may also be stored to a memory.

In some optional embodiments, before block S203, the method for processing audio data also include the following blocks.

At block S202', an audio matrix for sending the audio data is determined, and a microphone for collecting the audio data is determined based on the audio matrix.

In some scenarios, if two or more audio matrices are included and the microphones associated with the audio matrices adopt the same identification, it is necessary to firstly determine the audio matrix for sending the audio data. The identification includes letters or numbers. For example, if one conference scene includes two audio matrices, namely the audio matrix 1 and the audio matrix 2, in which the audio matrix 1 is associated with 3 microphones identified by numbers 1, 2 and 3, and the audio matrix 2 is associated with 3 microphones identified by numbers 1, 2 and 3. In order to determine the microphone that collects the audio data, it is necessary to firstly determine the audio matrix that sends the audio data, and then determine the microphone that collects the audio data in the microphones associated with the audio matrix.

At block S203', an identifier of the microphone that collects the audio data is determined, and the identifier of the microphone is sent, so that a receiving end displays the text data, an audio waveform corresponding to the audio data, and the identifier of the microphone that collects the audio data.

In some embodiments, the identifier of the microphone is used to distinguish each microphone in the microphone array.

In some embodiments, the apparatus for processing audio data determines the audio matrix that transmits the audio data and the identifier of the microphone that collects the audio data. In detail, when the audio matrix sends the audio data to the apparatus for processing audio data, the audio matrix can also send the identifier of the audio matrix and the identifier of the microphone that collects the audio data. The apparatus for processing audio data can also obtain the identifier of the audio matrix and the identifier of the microphone included in the audio matrix before the conference. Moreover, a one-to-one correspondence is generated between the identifier of the microphone and the attendee, that is, each microphone picks up the audio data of a specific attendee, and there are correspondences between the identifiers of the microphones and the names of the attendees.

In some embodiments, the method further includes: generating a correspondence between the audio data and the audio matrix and a correspondence between the audio data and the microphone.

In the embodiments of the disclosure, the correspondence represents the audio matrix that sends the audio data and the microphone that collects the audio data. By determining the audio matrix corresponding to the audio data and the microphone that picks up the audio data, the correspondence between the audio data and the audio matrix and the correspondence between the audio data and the microphone are generated, which enables the apparatus for processing audio data to determine the attendees corresponding to the audio data. If one microphone is designated to one attendee, crosstalk of audio data can be avoided, so that the apparatus for processing audio data can accurately acquire the audio data of each attendee.

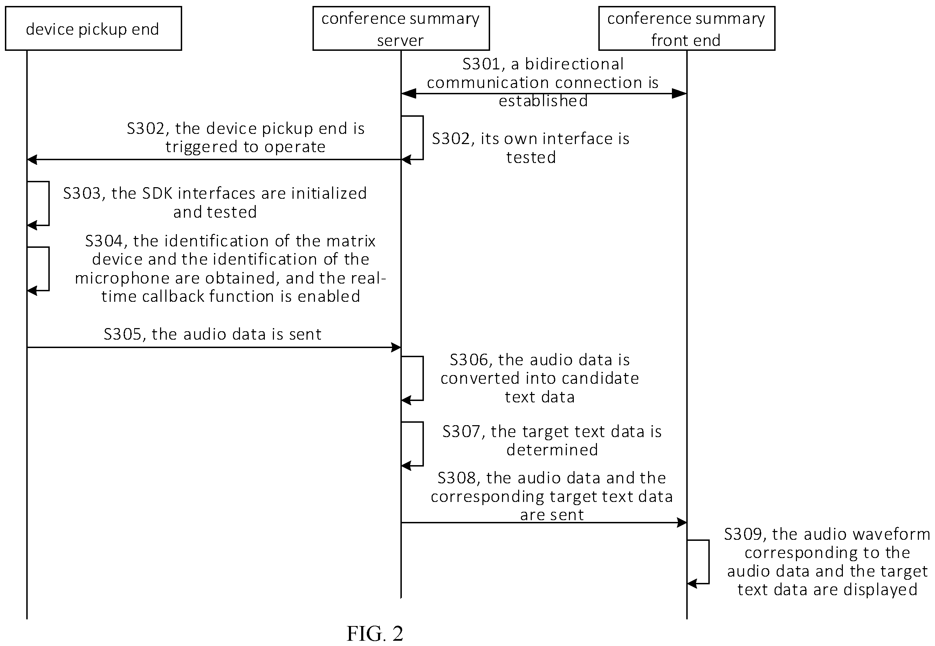

The method for processing audio data according to the embodiments of the disclosure will be described below by taking that the device pickup end picks up the audio data in the conference scene and the audio data is converted by a conference summary server as an example. FIG. 2 is a detailed flowchart illustrating a method for processing audio data according to the embodiments of the disclosure. The method at least includes the following blocks.

At block S301, a conference summary front end triggers the start of the conference, and a bidirectional communication, such as Web Socket (WS), connection between the conference summary front end and the conference summary server is generated.

The WebSocket is a communication protocol based on Transmission Control Protocol (TCP)/Internet Protocol (IP) and independent of HyperText Transfer Protocol (HTTP). The WebSocket is a bidirectional communication and has states, to realize two-way real-time responses (client ⇄ server) between one client (multiple clients) and one server (multiple servers).

In some embodiments, the conference summary front end may be an electronic device installed with an application program corresponding to the conference or a small program corresponding to the conference. The conference can be started by touching a corresponding control.

In some embodiments, the conference summary front end can also be a part of the conference summary server, and the conference summary front end is configured to start the conference and display the conference summary.

At block S302, the conference summary server tests its own interfaces and triggers the operation of the device pickup end.

In some embodiments, the conference summary server testing its own interfaces may refer to: testing whether the interfaces of the conference summary service for receiving the audio data sent by the device pickup end are available.

At block S303, the device pickup end initializes its own Software Development Kit (SDK) interfaces, and performs the performance test of the SDK interfaces.

In some embodiments, the device pickup end includes an audio matrix. The audio matrix receives the audio data sent by the microphone matrix through the SDK interfaces.

In some embodiments, the process of performing the performance test of the SDK interfaces at the device pickup end includes the following. The attendees access the conference and generates the audio data, the microphone matrix picks up the audio data and sends the audio data to the device pickup end. The device pickup end performs the performance test of the SDK interfaces by detecting whether it receives the audio data, and/or detecting whether the audio data can be identified. If the device pickup end can receive the audio data and recognize the received audio data, it means that the performance of the SDK interfaces is good. If the device pickup end cannot receive the audio data or recognize the received audio data after the audio data is received, it indicates that the performance of the SDK interfaces is poor, so that the device pickup end needs to be debugged, to enable the device pickup end to receive the audio data and recognize the received audio data.

At block S304, the device pickup end obtains the identification of the matrix device and the identification of the microphone, and enables a real-time callback function.

In some embodiments, by enabling the real-time callback function, the device pickup end calls the callback function in real time when receiving the audio data sent by the audio matrix, and sends the audio data to the conference summary server through the callback function.

In some embodiments, the device pickup end can also create a handle pointing to a fixed location (such as an area where the audio data of a certain attendee is stored). The values in this area can change dynamically, but always record the address of the audio data in the memory at the current moment. In this way, no matter how the position of the object changes in the memory, as long as the value of the handle can be obtained, the area can be located, and the audio data can be obtained.

At block S305, the device pickup end sends the picked-up audio data to the conference summary server.

At block S306, the conference summary server converts the audio data into the candidate text data.

At block S307, the device pickup end matches the candidate text with the sensitive words and the hot words, and obtains the target text data by deleting or correcting the contents in the candidate text according to the matching result.

At block S308, the conference summary server sends the audio data and the corresponding target text data to the conference summary front end.

At block S309, the conference summary front end displays the target text data and the audio waveform corresponding to the audio data.

In some embodiments, if the conference is completed, the device pickup end logs out, the handle is released, and the SDK interfaces are cleared, then the logout process for conference voice pickup is completed.

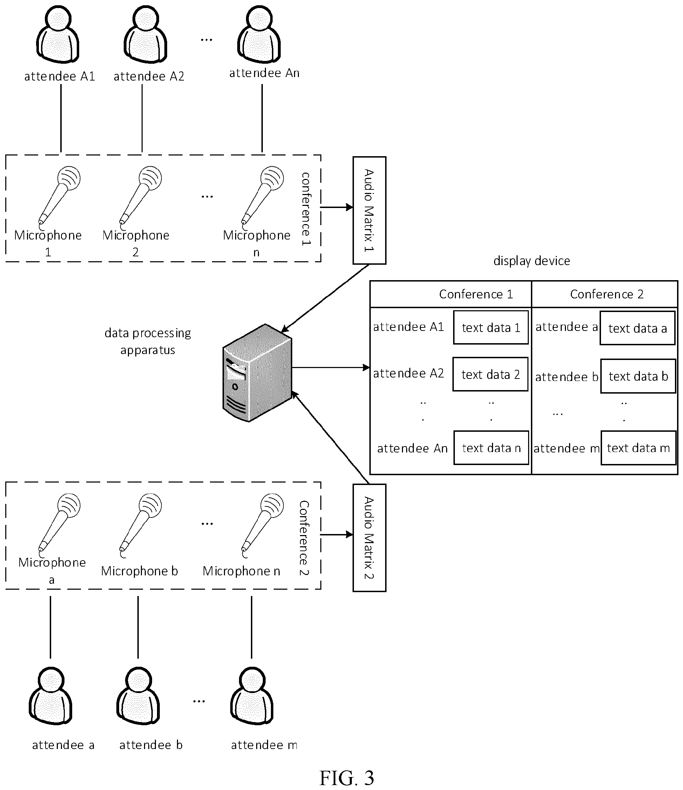

In the embodiments of the disclosure, the apparatus for processing audio data can process the data generated by one conference, or data of two or more conferences simultaneously. The following is an example that the apparatus for processing audio data processes data simultaneously generated in two conferences. FIG. 3 is an architecture diagram of simultaneously processing the data generated by two conferences by the apparatus for processing audio data according to the embodiments of the disclosure. As illustrated in FIG. 3, the two conferences are the conference 1 and the conference 2. There are n attendees in the conference 1, namely the attendee A1, the attendee A2... attendee An, and there are m attendees in the conference 2, namely the attendee a, the attendee b... the attendee m. The audio data of the n attendees in the conference 1 are collected by the microphone 1, the microphone 2 ... the microphone n respectively, and sent to the audio matrix 1. The audio matrix 1 sends the audio data of the conference 1 and the microphone identifier corresponding to each piece of audio data to the apparatus for processing audio data. The audio data of the m attendees in the conference 2 are collected by the microphone a, the microphone b... the microphone m respectively, and sent to the audio matrix 2. The audio matrix 2 sends the audio data of the conference 2 and the microphone identifier corresponding to each piece of audio data to the apparatus for processing audio data. The microphone processing device converts the received data of the conference 1 and the conference 2 into text data respectively, and sends the text data and the names of the attendees corresponding to the data to the display device. The display device displays the names of the attendees corresponding to a text data set. The display device may be a device independent of the apparatus for processing audio data, or a device belong to the apparatus for processing audio data.

It should be noted that, in the embodiments of the disclosure, collecting the audio data by the microphone may also be referred to as picking up the audio data by the microphone.

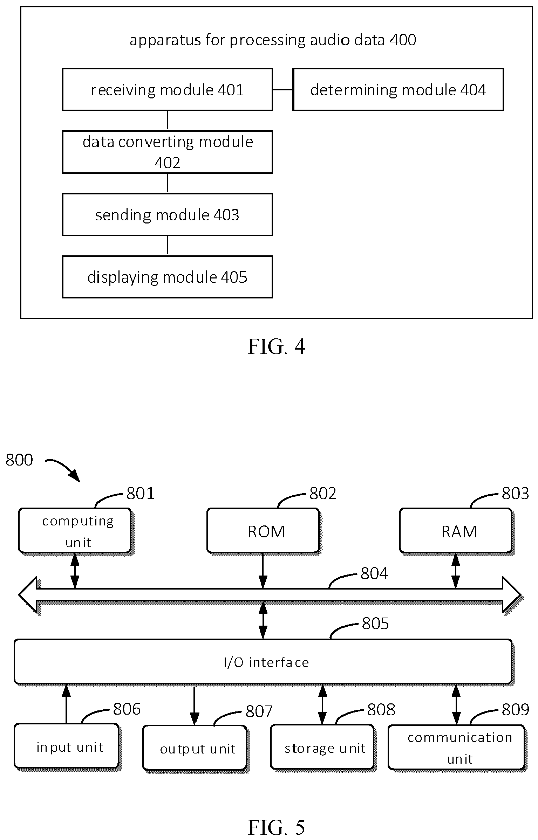

The embodiment of the disclosure also provides an apparatus for processing audio data. FIG. 4 is a schematic diagram illustrating an optional composition structure of the apparatus for processing audio data. The apparatus 400 includes: a receiving module 401, a data converting module 402 and a sending module 403.

The receiving module 401 is configured to receive at least two pieces of audio data sent by at least one audio matrix. The audio data is collected by a microphone array and sent to the audio matrix.

The data converting module 402 is configured to convert all the audio data into corresponding text data.

The sending module 403 is configured to send the audio data and the text data corresponding to the audio data.

In some optional embodiments, the data converting module 402 is further configured to for each piece of audio data, convert the audio data into candidate text data; and in response to determining that the candidate text data contains a sensitive word, obtain the text data by deleting the sensitive word in the candidate text data.

In some optional embodiments, the data converting module 402 is further configured to for each piece of audio data, convert the audio data into corresponding candidate text data; and in response to determining that the candidate text data contains a hot word, obtain the text data by modifying the candidate text data based on the hot word.

In some optional embodiments, the apparatus 400 for processing audio data further includes: a determining module 404. The determining module 404 is configured to: for each piece of audio data, determine an audio matrix that sends the audio data; and determine a microphone that collects the audio data based on the audio matrix.

In some optional embodiments, the determining module 404 is further configured to: for each piece of audio data, determine an identifier of the microphone used to collect the audio data. Microphone identifiers are configured to distinguish microphones in the microphone array.

The sending module 403 is further configured to: send the identifier of the microphone, so that a receiving end displays the text data, an audio waveform corresponding to the audio data, and the identifier of the microphone that collects the audio data.

In some optional embodiments, each audio matrix corresponds to a conference scene.

In some optional embodiments, the apparatus 400 for processing audio data also includes a displaying module 405. The displaying module 405 is configured to: for each piece of audio data, display an audio waveform corresponding to the audio data, the text data corresponding to the audio data, and the identifier of the microphone that collects the audio data.

In the technical solution of the disclosure, the acquisition, storage and application of the data involved comply with the provisions of relevant laws and regulations, and do not violate public order and good customs.

According to the embodiments of the disclosure, the disclosure further provides an electronic device, a readable storage medium and a computer program product. The electronic device includes the apparatus for processing audio data according to the embodiments of the disclosure.

FIG. 5 is a schematic block diagram of an example electronic device 800 used to implement the embodiments of the disclosure. In some embodiments, the electronic device 800 may be a terminal device or a server. In some embodiments, the electronic device 800 may implement the method for processing audio data according to the embodiments of the disclosure by running computer programs. For example, the computer program may be original programs or software modules in the operating system, native Applications (APPs) that needs to be installed in the operating system to run, applets that only needs to be downloaded into the browser environment to run, or applets that can be embedded in any APP. In conclusion, the above computer program may be any form of application, module or plug-in.

In practical applications, the electronic device 800 may be an independent physical server, a server cluster, a distributed system composed of multiple physical servers, or a cloud server providing basic cloud computing services such as cloud services, cloud databases, cloud computing, cloud functions, cloud storage, network services, cloud communications, middleware services, domain name services, security services, Content Delivery Network (CDN), and large data and artificial intelligence platforms. Cloud technology refers to a hosting technology that unifies a series of resources such as hardware, software, and network in a wide area network or a local area network, to realize data calculation, storage, processing and sharing. The electronic device 800 may be a smart phone, a tablet computer, a notebook computer, a desktop computer, a smart speaker, a smart TV and a smart watch, which is not limited here.

Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the electronic device 800 includes: a computing unit 801 performing various appropriate actions and processes based on computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a disk, an optical disk; and a communication unit 809, such as network cards, modems, and wireless communication transceivers. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a CPU, a graphics processing unit (GPU), various dedicated AI computing chips, various computing units that run machine learning model algorithms, and a digital signal processor (DSP), and any appropriate processor, controller and microcontroller. The computing unit 801 executes the various methods and processes described above, such as the method for processing audio data. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It is understandable that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of this disclosure shall be included in the protection scope of this disclosure.

## Claims

1. A method for processing audio data, comprising:
receiving (S201) at least two pieces of audio data sent by at least one audio matrix, wherein the audio data is collected by a microphone array and sent to the audio matrix;
converting (S202) all the audio data into corresponding text data; and
sending (S203; S308) the audio data and the text data corresponding to the audio data.

2. The method of claim 1, wherein converting (S202) all the audio data into the corresponding text data comprises:
for each piece of audio data, converting (S306) the audio data into corresponding candidate text data; and
in response to determining that the candidate text data contains a sensitive word, obtaining the corresponding text data by deleting the sensitive word in the candidate text data.

3. The method of claim 1, wherein converting (S202) all the audio data into the corresponding text data comprises:
for each piece of audio data, converting (S306) the audio data into corresponding candidate text data; and
in response to determining that the candidate text data contains a hot word, obtaining the corresponding text data by modifying the candidate text data based on the hot word.

4. The method of claim 1, further comprising:
for each piece of audio data, determining an audio matrix that sends the audio data; and
determining a microphone that collects the audio data based on the audio matrix.

5. The method of claim 1 or 4, further comprising:
for each piece of audio data, determining an identifier of the microphone that collects the audio data, wherein identifiers are configured to distinguish microphones in the microphone array; and
sending the identifier of the microphone, so that a receiving end displays the corresponding text data, an audio waveform corresponding to the audio data, and the identifier of the microphone.

6. The method of claim 1, wherein the audio matrices correspond to respective conference scenes.

7. An apparatus (400) for processing audio data, comprising:
a receiving module (401) , configured to receive at least two pieces of audio data sent by at least one audio matrix, wherein the audio data is collected by a microphone array and sent to the audio matrix;
a data converting module (402), configured to convert all the audio data into corresponding text data; and
a sending module (403), configured to send the audio data and the text data corresponding to the audio data.

8. The apparatus (400) of claim 7, wherein the data converting module (402) is further configured to:
for each piece of audio data, convert the audio data into corresponding candidate text data; and
in response to determining that the candidate text data contains a sensitive word, obtain the corresponding text data by deleting the sensitive word in the candidate text data.

9. The apparatus (400) of claim 7, wherein the data converting module (402) is further configured to:
for each piece of audio data, convert the audio data into corresponding candidate text data; and
in response to determining that the candidate text data contains a hot word, obtain the corresponding text data by modifying the candidate text data based on the hot word.

10. The apparatus (400) of claim 7, further comprising:
a determining module (404), configured to:
for each piece of audio data, determine an audio matrix that sends the audio data; and
determine a microphone that collects the audio data based on the audio matrix.

11. The apparatus (400) of claim 7 or 10, further comprising:
a determining module (404), configured to: for each piece of audio data, determine an identifier of the microphone that collects the audio data, wherein identifiers are configured to distinguish the microphones in the microphone array; and
wherein the sending module (403) is further configured to: send the identifier of the microphone, so that a receiving end displays the corresponding text data, an audio waveform corresponding to the audio data, and the identifier of the microphone.

12. The apparatus (400) of claim 7, wherein the audio matrices correspond to respective conference scenes.

13. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method of any one of claims 1-6.

14. A non-transitory computer-readable storage medium having computer instructions stored thereon, wherein the computer instructions are configured to cause a computer to implement the method of any one of claims 1-6.

15. A computer program product comprising computer programs/instructions, wherein when the computer programs/instructions are executed by a processor, the method of any one of claims 1-6 is implemented.
